# EUROPEAN PATENT APPLICATION

(11) **EP 4 443 972 A1**
(43) Date of publication of application: **09.10.2024**
(21) Application number: 22914454.8
(22) Date of filing: 21.12.2022
(51) Int. Cl.: H04W 36/08

(54) **CELL HANDOVER METHOD AND APPARATUS**

(30) Priority: 30.12.2021 CN 202111650368
(71) Applicant: Huawei Technologies Co., Ltd., Shenzhen, Guangdong 518129 (CN)
(72) Inventor: GU, Zhifang, Shenzhen, Guangdong 518129 (CN); LOU, Chong, Shenzhen, Guangdong 518129 (CN)
(74) Representative: Körber, Martin Hans
(86) International application number: PCT/CN2022/140723
(87) International publication number: WO 2023/125200

(57) **Abstract**

Embodiments of this application provide a cell handover method and an apparatus. A terminal device receives a first message from a network device to which a source cell belongs, where the first message indicates the terminal device to perform cell handover, the first message carries first indication information, and the first indication information indicates a plurality of beam directions. The terminal device communicates, by using the plurality of beam directions, with a network device to which at least one target cell belongs, where the at least one target cell is a cell to which the terminal device is handed over. Because the terminal device communicates with the target cell by using the plurality of beam directions in a process of performing cell handover, robustness of cell handover can be improved, and a success rate of accessing the target cell by the terminal device can be improved. In addition, because a quantity of target cells to which the terminal device is handed over may be greater than 1, handover of a plurality of serving cells may be further implemented, and uninterrupted large-capacity transmission of the terminal device is maintained.

## Description

### CROSS-REFERENCE TO RELATED APPLICATIONS

This application claims priority to Chinese Patent Application No. 202111650368.9, filed with the China National Intellectual Property Administration on December 30, 2021 and entitled "CELL HANDOVER METHOD AND APPARATUS", which is incorporated herein by reference in its entirety.

### TECHNICAL FIELD

This application relates to the field of communication technologies, and in particular, to a cell handover method and an apparatus.

### BACKGROUND

In a known cell (cell) handover solution, a network device corresponding to a source cell sends a handover message to a terminal device to indicate the terminal device to perform cell handover. The handover message includes information about a beam (beam) direction that needs to be used when the terminal device communicates with a network device corresponding to a target cell. After receiving the handover message, the terminal device performs cell handover based on the beam direction.

However, due to factors such as mobility of the terminal device and channel fluctuation, robustness of an existing cell handover solution is poor, and problems such as a cell handover interruption or failure often occur.

Therefore, how to improve robustness of cell handover is a problem that needs to be urgently resolved.

### SUMMARY

Embodiments of this application provide a cell handover method and an apparatus, to improve robustness of cell handover.

According to a first aspect, a cell handover method is provided. The method may be performed by a terminal device or a chip in the terminal device. For example, the method is performed by the terminal device, and the method includes: A terminal device receives a first message from a network device to which a source cell belongs, where the first message indicates the terminal device to perform cell handover, the first message carries first indication information, and the first indication information indicates a plurality of beam directions. The terminal device communicates, by using the plurality of beam directions, with a network device to which at least one target cell belongs, where the at least one target cell is a cell to which the terminal device is handed over

In the foregoing solution, the terminal device communicates with the target cell by using the plurality of beam directions in a process of performing cell handover. Therefore, robustness of cell handover can be improved, and a success rate of accessing the target cell by the terminal device can be improved. In addition, because a quantity of target cells to which the terminal device is handed over may be greater than 1, handover of a plurality of serving cells may be further implemented, and uninterrupted large-capacity transmission of the terminal device may be maintained.

In a possible implementation, the first message further carries second indication information, the second indication information indicates types of the plurality of beam directions, and the types include one or more of the following: a beam direction used by the terminal device to send an uplink signal, a beam direction used by the terminal device to receive a downlink signal, and a beam direction used by the terminal device to send an uplink signal and receive a downlink signal.

In this implementation, the terminal device may properly use the plurality of beam directions based on an indication of the network device, for example, use a beam direction to send an uplink signal and use a beam direction used to receive a downlink signal, thereby improving communication reliability.

In a possible implementation, that the terminal device communicates, by using the plurality of beam directions, with a network device to which at least one target cell belongs includes: The terminal device sends, by using the plurality of beam directions, control signaling and/or service data to the network device to which the at least one target cell belongs; and/or receives control signaling and/or service data from the network device to which the at least one target cell belongs.

In this implementation, the terminal device communicates the control signaling and/or the service data with the at least one target cell by using the plurality of beam directions, so that a success rate of communicating the control signaling and/or the service data by the terminal device can be improved.

In a possible implementation, the first message further carries: third indication information, indicating synchronization information of the at least one target cell; and/or fourth indication information, indicating that the terminal device does not need to initiate random access to the at least one target cell.

One or more pieces of the foregoing information is provided, so that the terminal device can quickly learn that the terminal device does not need to initiate random access, but directly communicates with the target cell, thereby improving efficiency of communication between the terminal device and the target cell.

In a possible implementation, that the terminal device communicates, by using the plurality of beam directions, with a network device to which at least one target cell belongs further includes: The terminal device sends, by using the plurality of beam directions, a second message to the network device to which the at least one target cell belongs, where the second message indicates whether the terminal device successfully receives the first message.

In this implementation, the network device can sense a status of the terminal device in a timely manner, to better control the terminal device to perform cell handover, thereby improving reliability of cell handover.

In a possible implementation, that the terminal device communicates, by using the plurality of beam directions, with a network device to which at least one target cell belongs includes: The terminal device sends, by using at least two of the plurality of beam directions, a preamble to the network device to which the at least one target cell belongs.

In this implementation, the terminal device sends, by using the at least two of the plurality of beam directions, the preamble to the network device to which the at least one target cell belongs, so that efficiency of random access of the terminal device can be improved, thereby improving efficiency of cell handover of the terminal device.

In a possible implementation, the first message further carries one or more of the following:
fifth indication information, indicating that the terminal device needs to initiate random access to the at least one target cell;
sixth indication information, indicating whether the terminal device reports a reference signal measurement result of the at least one target cell in a random access procedure;
seventh indication information, indicating a quantity of times that the terminal device repeatedly sends the preamble; or
eighth indication information, indicating a type of a cell to which the terminal device needs to be handed over, where the cell type includes a primary cell and/or a secondary cell.

One or more pieces of the foregoing information is provided, so that efficiency of initiating random access by the terminal device to the target cell can be improved, thereby improving efficiency of cell handover.

In a possible implementation, the terminal device receives, by using at least one of the plurality of beam directions, a third message from a network device to which a first target cell belongs, where the at least one target cell includes the first target cell, the third message carries ninth indication information, and the ninth indication information indicates synchronization information of the first target cell.

In this implementation, the terminal device may perform random access to learn of the synchronization information of the first target cell, so as to ensure that cell handover can be quickly implemented in a scenario in which the source cell is not synchronized with the target cell.

In a possible implementation, the third message may further carry: tenth indication information, indicating at least one activated beam direction.

In this implementation, after successful access, the terminal device can use the activated beam direction to communicate with the target cell more quickly by using a more accurate beam direction, so that communication reliability and a capacity can be further improved.

In a possible implementation, the third message may further carry: eleventh indication information, indicating a radio network temporary identifier allocated by the first target cell to the terminal device.

In this implementation, after successful access, the terminal device may use the radio network temporary identifier allocated by the first target cell to the terminal device, so that the terminal device can communicate with the target cell more quickly by using a more accurate beam direction.

In a possible implementation, the third message may further carry: twelfth indication information, indicating synchronization information of a second target cell, where the at least one target cell includes the second target cell, and the second target cell is different from the first target cell.

In this implementation, a response returned by one target cell (for example, the first target cell) may carry synchronization information of another target cell (for example, the second target cell), thereby reducing resource overheads.

In a possible implementation, the third message further includes thirteenth indication information, and the thirteenth indication information indicates that the third message carries the tenth indication information, the eleventh indication information, or the twelfth indication information.

In this implementation, different information can be carried in different scenarios based on a same message field, thereby improving communication flexibility.

In a possible implementation, the third message is carried in a MAC PDU.

In a possible implementation, the terminal device communicates control signaling and/or service data with the at least one target cell by using a first beam direction, where the first beam direction includes a beam direction in the plurality of beam directions indicated in the first message and/or a beam direction in the at least one activated beam direction indicated in the third message.

In this implementation, after cell handover, the terminal device may communicate with the target cell by using the activated beam direction of the target cell and/or the beam direction indicated by the first message, so that communication reliability and a capacity can be further improved.

According to a second aspect, a cell handover method is provided. The method may be performed by a network device to which a source cell belongs or a chip in the network device to which the source cell belongs. For example, the method is performed by the network device to which the source cell belongs, and the method includes: A first network device receives a fourth message from a second network device, where the fourth message indicates that a first target cell allows a terminal device to be handed over, the second network device is a network device to which the first target cell belongs, and the first network device is a network device to which a source cell of the terminal device belongs. The first network device sends a first message to the terminal device, where the first message indicates the terminal device to perform cell handover, the first message carries first indication information, the first indication information indicates a plurality of beam directions, the plurality of beam directions are used by the terminal device to communicate with a network device to which at least one target cell belongs, and the at least one target cell includes the first target cell.

In a possible implementation, the first message further carries second indication information, the second indication information indicates types of the plurality of beam directions, and the types include one or more of the following: a beam direction used by the terminal device to send an uplink signal, a beam direction used by the terminal device to receive a downlink signal, and a beam direction used by the terminal device to send an uplink signal and receive a downlink signal.

In a possible implementation, the first message further carries: third indication information, indicating synchronization information of the at least one target cell; and/or fourth indication information, indicating that the terminal device does not need to initiate random access to the at least one target cell.

In a possible implementation, the first message further carries one or more of the following:
fifth indication information, indicating that the terminal device needs to initiate random access to the at least one target cell;
sixth indication information, indicating whether the terminal device reports a reference signal measurement result of the at least one target cell in a random access procedure;
seventh indication information, indicating a quantity of times that the terminal device repeatedly sends a preamble; or
eighth indication information, indicating a type of a cell to which the terminal device needs to be handed over, where the cell type includes a primary cell and/or a secondary cell.

For beneficial effect of the implementations of the second aspect, refer to the descriptions of the beneficial effect of the corresponding implementations of the first aspect. Details are not described again.

According to a third aspect, a cell handover method is provided. The method may be performed by a network device to which any target cell belongs or a chip in the network device to which the target cell belongs. For example, the method is performed by a network device to which a first target cell belongs, and the method includes: A second network device sends a fourth message to a first network device, where the fourth message indicates that a first target cell allows a terminal device to be handed over, the second network device is a network device to which the first target cell belongs, and the first network device is a network device to which a source cell of the terminal device belongs. The second network device communicates with the terminal device by using a plurality of beam directions.

In a possible implementation, that the second network device communicates with the terminal device by using a plurality of beam directions includes: The second network device sends control signaling and/or service data to the terminal device by using the plurality of beam directions, and/or receives control signaling and/or service data from the terminal device.

In a possible implementation, that the second network device communicates with the terminal device by using a plurality of beam directions includes: The second network device receives a second message from the terminal device by using the plurality of beam directions, where the second message indicates whether the terminal device successfully receives a first message sent by the first network device, the first message indicates the terminal device to perform cell handover, the first message carries first indication information, and the first indication information indicates the plurality of beam directions.

In a possible implementation, that the second network device communicates with the terminal device by using a plurality of beam directions includes: The second network device receives a preamble from the terminal device by using at least two of the plurality of beam directions.

In a possible implementation, the second network device sends a third message to the terminal device by using at least one of the plurality of beam directions, where the third message carries ninth indication information, and the ninth indication information indicates synchronization information of the first target cell.

In a possible implementation, the third message further carries: tenth indication information, indicating at least one activated beam direction; eleventh indication information, indicating a radio network temporary identifier allocated by the first target cell to the terminal device; or twelfth indication information, indicating synchronization information of a second target cell, where the second target cell is different from the first target cell.

In a possible implementation, the third message further includes thirteenth indication information, and the thirteenth indication information indicates that the third message carries the tenth indication information, the eleventh indication information, or the twelfth indication information.

In a possible implementation, the third message is carried in a MAC PDU.

In a possible implementation, the second network device communicates control signaling and/or service data with the terminal device by using a first beam direction, where the first beam direction includes a beam direction in the plurality of beam directions indicated in the first message, and/or a beam direction in the at least one activated beam direction indicated in the third message.

For beneficial effect of the implementations of the third aspect, refer to the descriptions of the beneficial effect of the corresponding implementations of the first aspect. Details are not described again.

According to a fourth aspect, a communication apparatus is provided. The apparatus includes a module/unit/technical means configured to perform the method according to any one of the first aspect or the possible implementations of the first aspect.

For example, the apparatus includes a transceiver unit, configured to: receive a first message from a network device to which a source cell belongs, where the first message indicates a terminal device in which the apparatus is located to perform cell handover, the first message carries first indication information, and the first indication information indicates a plurality of beam directions; and communicate, by using a plurality of beam directions, with a network device to which at least one target cell belongs, where the at least one target cell is a cell to which the terminal device in which the apparatus is located is handed over

In a possible implementation, the first message further carries second indication information, the second indication information indicates types of the plurality of beam directions, and the types include one or more of the following: a beam direction used by the terminal device in which the apparatus is located to send an uplink signal, a beam direction used by the terminal device in which the apparatus is located to receive a downlink signal, and a beam direction used by the terminal device in which the apparatus is located to send an uplink signal and receive a downlink signal.

In a possible implementation, the transceiver unit is specifically configured to: when communicating, by using the plurality of beam directions, with the network device to which the at least one target cell belongs, send, by using the plurality of beam directions, control signaling and/or service data to the network device to which the at least one target cell belongs; and/or receive control signaling and/or service data from the network device to which the at least one target cell belongs.

In a possible implementation, the first message further carries:
third indication information, indicating synchronization information of the at least one target cell; and/or
fourth indication information, indicating that the terminal device in which the apparatus is located does not need to initiate random access to the at least one target cell.

In a possible implementation, the transceiver unit is further configured to: when communicating, by using the plurality of beam directions, with the network device to which the at least one target cell belongs, send, by using the plurality of beam directions, a second message to the network device to which the at least one target cell belongs, where the second message indicates whether the terminal device in which the apparatus is located successfully receives the first message.

In a possible implementation, the transceiver unit is configured to: when communicating, by using the plurality of beam directions, with the network device to which the at least one target cell belongs, send, by using at least two of the plurality of beam directions, a preamble to the network device to which the at least one target cell belongs.

In a possible implementation, the first message further carries one or more of the following:
fifth indication information, indicating that the terminal device in which the apparatus is located needs to initiate random access to the at least one target cell;
sixth indication information, indicating whether the terminal device in which the apparatus is located reports a reference signal measurement result of the at least one target cell in a random access procedure;
seventh indication information, indicating a quantity of times that the terminal device in which the apparatus is located repeatedly sends the preamble; or
eighth indication information, indicating a type of a cell to which the terminal device in which the apparatus is located needs to be handed over, where the cell type includes a primary cell and/or a secondary cell.

In a possible implementation, the transceiver unit is further configured to receive, by using at least one of the plurality of beam directions, a third message from a network device to which a first target cell belongs, where the at least one target cell includes the first target cell, the third message carries ninth indication information, and the ninth indication information indicates synchronization information of the first target cell.

In a possible implementation, the third message further carries:
tenth indication information, indicating at least one activated beam direction;
eleventh indication information, indicating a radio network temporary identifier allocated by the first target cell to the terminal device in which the apparatus is located; or
twelfth indication information, indicating synchronization information of a second target cell, where the at least one target cell includes the second target cell, and the second target cell is different from the first target cell.

In a possible implementation, the third message further includes thirteenth indication information, and the thirteenth indication information indicates that the third message carries the tenth indication information, the eleventh indication information, or the twelfth indication information.

In a possible implementation, the third message is carried in a MAC PDU.

In a possible implementation, the transceiver unit is further configured to communicate control signaling and/or service data with the at least one target cell by using a first beam direction, where the first beam direction includes a beam direction in the plurality of beam directions indicated in the first message and/or a beam direction in the at least one activated beam direction indicated in the third message.

According to a fifth aspect, a communication apparatus is provided. The apparatus includes a module/unit/technical means configured to perform the method according to any one of the second aspect or the possible implementations of the second aspect.

For example, the apparatus includes a transceiver unit, configured to: receive a fourth message from a second network device, where the fourth message indicates that a first target cell allows a terminal device to be handed over, the second network device is a network device to which the first target cell belongs, and a first network device in which the apparatus is located is a network device to which a source cell of the terminal device belongs; and send a first message to the terminal device, where the first message indicates the terminal device to perform cell handover, the first message carries first indication information, the first indication information indicates a plurality of beam directions, the plurality of beam directions are used by the terminal device to communicate with a network device to which at least one target cell belongs, and the at least one target cell includes the first target cell.

In a possible implementation, the first message further carries second indication information, the second indication information indicates types of the plurality of beam directions, and the types include one or more of the following: a beam direction used by the terminal device to send an uplink signal, a beam direction used by the terminal device to receive a downlink signal, and a beam direction used by the terminal device to send an uplink signal and receive a downlink signal.

In a possible implementation, the first message further carries:
third indication information, indicating synchronization information of the at least one target cell; and/or
fourth indication information, indicating that the terminal device does not need to initiate random access to the at least one target cell.

In a possible implementation, the first message further carries one or more of the following:
fifth indication information, indicating that the terminal device needs to initiate random access to the at least one target cell;
sixth indication information, indicating whether the terminal device reports a reference signal measurement result of the at least one target cell in a random access procedure;
seventh indication information, indicating a quantity of times that the terminal device repeatedly sends a preamble; or
eighth indication information, indicating a type of a cell to which the terminal device needs to be handed over, where the cell type includes a primary cell and/or a secondary cell.

According to a sixth aspect, a communication apparatus is provided. The apparatus includes a module/unit/technical means configured to perform the method according to any one of the third aspect or the possible implementations of the third aspect.

For example, the apparatus includes a transceiver unit, configured to: send a fourth message to a first network device, where the fourth message indicates that a first target cell allows a terminal device to be handed over, a second network device in which the apparatus is located is a network device to which the first target cell belongs, and the first network device is a network device to which a source cell of the terminal device belongs; and communicate with the terminal device by using a plurality of beam directions.

In a possible implementation, the transceiver unit is specifically configured to: when communicating with the terminal device by using the plurality of beam directions, send control signaling and/or service data to the terminal device by using the plurality of beam directions, and/or receive control signaling and/or service data from the terminal device.

In a possible implementation, the transceiver unit is further configured to: when communicating with the terminal device by using the plurality of beam directions, receive a second message from the terminal device by using the plurality of beam directions, where the second message indicates whether the terminal device successfully receives a first message sent by the first network device, the first message indicates the terminal device to perform cell handover, the first message carries first indication information, and the first indication information indicates the plurality of beam directions.

In a possible implementation, the transceiver unit is specifically configured to: when communicating with the terminal device by using the plurality of beam directions, receive a preamble from the terminal device by using at least two of the plurality of beam directions.

In a possible implementation, the transceiver unit is further configured to send a third message to the terminal device by using at least one of the plurality of beam directions, where the third message carries ninth indication information, and the ninth indication information indicates synchronization information of the first target cell.

In a possible implementation, the third message further carries:
tenth indication information, indicating at least one activated beam direction;
eleventh indication information, indicating a radio network temporary identifier allocated by the first target cell to the terminal device; or
twelfth indication information, indicating synchronization information of a second target cell, where the second target cell is different from the first target cell.

In a possible implementation, the third message further includes thirteenth indication information, and the thirteenth indication information indicates that the third message carries the tenth indication information, the eleventh indication information, or the twelfth indication information.

In a possible implementation, the third message is carried in a MAC PDU.

In a possible implementation, the transceiver unit is further configured to communicate control signaling and/or service data with the terminal device by using a first beam direction, where the first beam direction includes a beam direction in the plurality of beam directions indicated in the first message, and/or a beam direction in the at least one activated beam direction indicated in the third message.

According to a seventh aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement, through a logic circuit or by executing code instructions, the method according to any one of the first aspect or the possible implementations of the first aspect, any one of the second aspect or the possible implementations of the second aspect, or any one of the third aspect or the possible implementations of the third aspect.

Optionally, the communication apparatus further includes a memory.

According to an eighth aspect, a computer-readable storage medium is provided, including a program or instructions. When the program or the instructions are run on a computer, the method according to any one of the first aspect or the possible implementations of the first aspect, any one of the second aspect or the possible implementations of the second aspect, or any one of the third aspect or the possible implementations of the third aspect is enabled to be performed.

According to a ninth aspect, a computer program product is provided, including instructions. When the instructions are run on a computer, the method according to any one of the first aspect or the possible implementations of the first aspect, any one of the second aspect or the possible implementations of the second aspect, or any one of the third aspect or the possible implementations of the third aspect is enabled to be performed.

According to a tenth aspect, a communication system is provided, including the apparatus according to any one of the fourth aspect or the possible implementations of the fourth aspect, the apparatus according to any one of the fifth aspect or the possible implementations of the fifth aspect, and the apparatus according to any one of the sixth aspect or the possible implementations of the sixth aspect.

### BRIEF DESCRIPTION OF DRAWINGS

FIG. 1 is a diagram of an architecture of a communication system according to an embodiment of this application;
FIG. 2 is a flowchart of a cell handover method according to an embodiment of this application;
FIG. 3 is a flowchart of a random access method according to an embodiment of this application;
FIG. 4A and FIG. 4B are diagrams of two formats of a MAC PDU according to an embodiment of this application;
FIG. 5 is a flowchart of an information exchange method according to an embodiment of this application;
FIG. 6 is a flowchart of another information exchange method according to an embodiment of this application;
FIG. 7 is a diagram of a structure of a possible communication apparatus according to an embodiment of this application; and
FIG. 8 is a diagram of a structure of another possible communication apparatus according to an embodiment of this application.

### DESCRIPTION OF EMBODIMENTS

The technical solutions in embodiments of this application may be applied to various communication systems, for example, a universal mobile telecommunications system (Universal Mobile Telecommunications System, UMTS), a code division multiple access (Code Division Multiple Access, CDMA) system, a wireless local area network (Wireless Local Area Network, WLAN), a side link (Sidelink) communication system, a fourth generation (4th generation, 4G) communication system, a fifth generation (the fifth generation, 5G) wireless communication system, a sixth generation (6th generation, 6G) communication system or another future evolved system, or various other wireless communication systems that use a radio access technology. The technical solutions in embodiments of this application may be used provided that there is a cell handover requirement in the communication system.

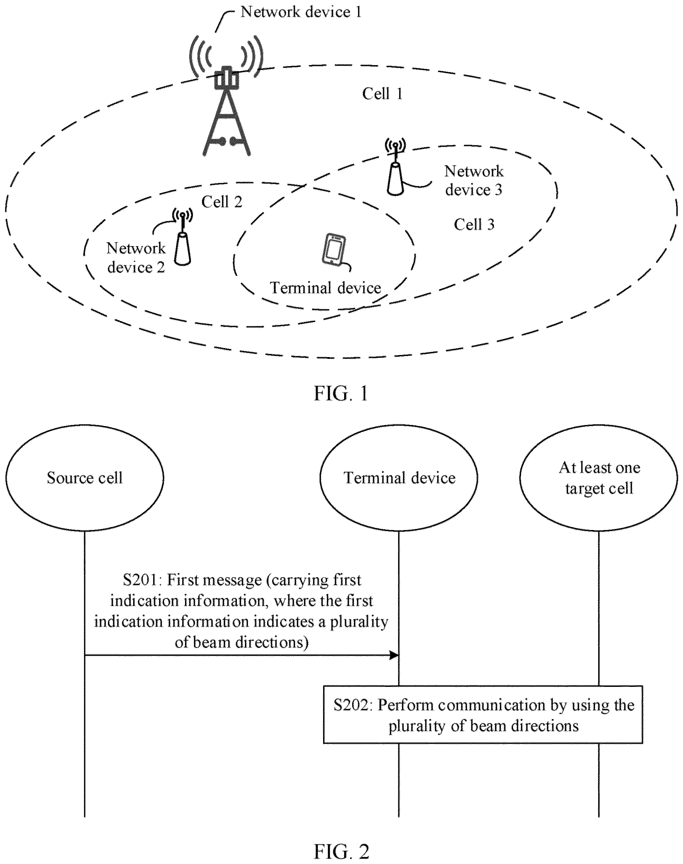

FIG. 1 is a diagram of an architecture of a communication system according to an embodiment of this application. As shown in FIG. 1, the communication system includes a terminal device and a network device.

The network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like, or may be a module or a unit that completes a part of functions of the base station, for example, may be a central unit (central unit, CU) or may be a distributed unit (distributed unit, DU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete functions of a part or all of a physical layer. For specific descriptions of the foregoing protocol layers, refer to technical specifications related to the 3rd generation partnership project (3rd generation partnership project, 3GPP). The network device may be a macro base station, a micro base station, an indoor base station, a relay node, a donor node, or the like. A specific technology and a specific device form that are used by the network device are not limited in embodiments of this application.

The terminal device may also be referred to as a terminal, user equipment (user equipment, UE), a mobile station, a mobile terminal, or the like. The terminal device may be widely used in various scenarios, for example, a device-to-device (device-to-device, D2D) scenario, a vehicle-to-everything (vehicle to everything, V2X) communication scenario, a machine-type communication (machine-type communication, MTC) scenario, an internet of things (internet of things, IOT) scenario, a virtual reality scenario, an augmented reality scenario, an industrial control scenario, a self-driving scenario, a telemedicine scenario, a smart grid scenario, a smart furniture scenario, a smart office scenario, a smart wearable scenario, a smart transportation scenario, and a smart city scenario. The terminal device may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal device are not limited in embodiments of this application.

It may be understood that the network device and the terminal device may be at fixed locations, or may be movable. The network device and the terminal device may be deployed on the land, including an indoor device, an outdoor device, a handheld device, or a vehicle-mounted device; may be deployed on the water surface; or may be deployed on a plane, a balloon, and a satellite in the air. Application scenarios of the network device and the terminal device are not limited in embodiments of this application.

It may be understood that roles of the network device and the terminal device may be relative. For example, the unmanned aerial vehicle may be configured as a mobile network device. For a terminal device that accesses a network via the unmanned aerial vehicle, the unmanned aerial vehicle is a network device. However, for a network device accessed by the unmanned aerial vehicle, the unmanned aerial vehicle is a terminal device.

In embodiments of this application, the network device sends a downlink signal or downlink information to the terminal device, where the downlink information is carried on a downlink channel. The terminal device sends an uplink signal or uplink information to the network device, where the uplink information is carried on an uplink channel. To communicate with the network device, the terminal device needs to establish a wireless connection to a cell controlled by the network device (that is, the terminal device camps on the cell controlled by the network device). The cell that establishes the wireless connection to the terminal device is referred to as a serving cell of the terminal device.

The terminal device is located within coverage of one or more cells, and there may be one or more cells serving the terminal device. For example, in a scenario shown in FIG. 1, the terminal device is located within coverage of a cell 1, a cell 2, and a cell 3, and all the cell 1, the cell 2, and the cell 3 may provide services for the terminal device. It should be noted that, in FIG. 1, an example in which one network device covers only one cell is used. In actual application, one network device may simultaneously cover a plurality of cells.

When there are a plurality of cells that provide services for the terminal device, the terminal device may work based on one or more of carrier aggregation (Carrier Aggregation, CA), dual connectivity (Dual Connectivity, DC), multiple connectivity (Multiple Connectivity, MC), multiple transmission reception points (Multiple Transmission Reception Points, mTRPs), and the like.

Due to mobility of the terminal device and/or a change of a cell channel condition, the terminal device may perform serving cell handover. A serving cell on which the terminal device originally camps (or a cell from which the terminal device is disconnected, or a cell from which the terminal device is handed over) is referred to as a source cell, and a cell on which the terminal device newly camps (or a cell to which the terminal device newly establishes a connection, or a cell to which the terminal device is handed over) is referred to as a target cell. In other words, the terminal device is handed over from the source cell to the target cell. The terminal device may camp on only one cell or simultaneously camp on a plurality of cells (the plurality of cells may be controlled by a same network device, or may be controlled by different network devices, and this is not limited in embodiments of this application). Correspondingly, when performing cell handover, the terminal device may perform handover of only one serving cell, or may simultaneously perform handover of a plurality of serving cells. This is not limited in embodiments of this application.

It may be understood that, in embodiments of this application, that the cell communicates with the terminal device (including that the cell sends a downlink signal to the terminal device, and/or that the cell receives an uplink signal from the terminal device) means that a network device (for example, a base station that controls the cell) to which the cell belongs communicates with the terminal device. If two cells: a cell and another cell, belong to different network devices (for example, two cells controlled by different base stations), that cells communicate with each other, for example, the cell communicates with the another cell, means that a network device to which the cell belongs communicates with a network device to which the another cell belongs (for example, two network devices transmit messages). If the two cells belong to a same network device (for example, two cells controlled by a same base station), that cells communicate with each other, for example, the cell communicates with the another cell, means that a function module that controls the cell in the network device exchanges, in the network device, signaling or data with a function module that controls the another cell.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as smart grid, industrial control, intelligent transportation, and smart city. The function of the terminal device may alternatively be performed by a module (for example, a chip or a modem) in the terminal device, or may be performed by an apparatus including a function of the terminal device.

FIG. 2 shows a cell handover method according to an embodiment of this application. The method may be applied to, but is not limited to, the communication system shown in FIG. 1. The method includes the following steps.

S201: A source cell sends a first message, and correspondingly, a terminal device receives the first message

The first message indicates the terminal device to perform cell handover, the first message carries first indication information, and the first indication information indicates a plurality of beam directions.

It may be understood that different beam directions may be associated with different cells. When a cell associated with the beam direction indicated in the first indication information is different from the source cell, beam handover and cell handover that are performed by the terminal device may be considered to be completed in a same step. In this case, the first message may indicate the terminal device to perform beam handover, so that the terminal device can be implicitly indicated to perform cell handover; or the first message may explicitly indicate the terminal device to perform cell handover, so that the terminal device can be implicitly indicated to perform beam handover.

That the source cell sends the first message is specifically that a network device to which the source cell belongs sends the first message. The network device to which the source cell belongs is, for example, a base station that controls the source cell.

It may be understood that there may be one or more source cells of the terminal device. When there are the plurality of source cells of the terminal device, each source cell may send the first message to the terminal device, or some of the plurality of source cells may send the first message to the terminal device. This is not limited in embodiments of this application.

It may be understood that when there are the plurality of source cells, network devices to which different source cells belong may be the same or different. If any two source cells belong to a same network device and both the two source cells send the first message, the network device to which the two source cells belong sends the first message twice.

When only one of the plurality of source cells sends the first message to the terminal device, the cell may be any one or a specified one of the plurality of source cells. This is not limited in this application. For example, if the plurality of source cells include one primary cell and at least one secondary cell, the first message may be sent by a source cell corresponding to the primary cell.

For ease of description, an example in which one source cell sends the first message to the terminal device is used for description, and an example in which a network device to which the source cell belongs is a first network device is used.

In a possible design, the source cell may indicate a beam direction based on a transmission configuration indicator (Transmission Configuration Indicator, TCI) state (State).

Specifically, a network device (which may be the first network device or another network device) may preconfigure a plurality of TCI states, and configuration information of each TCI state includes an identifier (Identity Document, ID) of the TCI state (for example, a TCI State ID) and quasi co-location (Quasi Co-Location, QCL) reference signal information corresponding to the TCI state.

For example, the network device preconfigures four TCI states:
TCI state ID=1, QCL Info=SSB index #1;
TCI state ID=2, QCL Info=SSB index #2;
TCI state ID=3, QCL Info=SSB index #3; and
TCI state ID=4, QCL Info=SSB index #4.

If the first indication information includes the TCI state ID=1 and the TCI state ID=2, it indicates that the first indication information indicates two beam directions. One beam direction is the same as a beam direction of the SSB index #1, and the other beam direction is the same as a beam direction of the SSB index #2.

It should be understood that, in this embodiment of this application, that a beam direction is the same as a beam direction of a reference signal may also be understood as that the terminal device uses the direction of the reference signal as a beam direction reference for sending and/or receiving a data signal and/or a control signal, for example, as a beam direction reference for sending uplink signals, for example, a physical uplink control channel (Physical Uplink Control Channel, PUCCH), a physical uplink shared channel (Physical Uplink Shared Channel, PUSCH), and a physical random access channel PRACH (Physical Random Access Channel, PRACH), and/or as a beam direction reference for receiving downlink signals, for example, a physical downlink control channel (Physical Downlink Control Channel, PDCCH) and a physical downlink shared channel (Physical Downlink Shared Channel, PUSCH).

Optionally, the configuration information of each TCI state may further include an identifier of a cell associated with the TCI state. The first network device may indicate the beam direction by indicating the TCI state ID to the terminal device. For example, "TCI state ID=1, QCL Info=SSB index #1, and Cell ID=5" indicates that the QCL Info in a TCI state of the TCI state ID=1 is the SSB index #1 of a cell whose Cell ID=5.

It should be understood that, in addition to a synchronization signal and a physical broadcast channel block (Synchronization Signal and Physical Broadcast Channel Block, SSB), the reference signal may be another signal, for example, a sounding reference signal (Sounding Reference Signal, SRS). This is not limited in this application.

In a possible design, the first message further carries second indication information, and the second indication information indicates a type of each of the plurality of beam directions.

In this embodiment of this application, there are the following three types of beam directions: (1) a beam direction used by the terminal device to send an uplink signal; (2) a beam direction used by the terminal device to receive a downlink signal; and (3) a beam direction used by the terminal device to send an uplink signal and receive a downlink signal.

During specific implementation, the source cell may indicate the type of the beam direction by carrying a type of the TCI state in the first message. For example, the TCI state may be classified into the following three types: (1) a joint (Joint) TCI state: may indicate both an uplink beam direction and a downlink beam direction; (2) an uplink (UpLink, UL) TCI state: indicates an uplink beam direction; and (3) a downlink (DownLink, DL) TCI state: indicates a downlink beam direction. Example 1: The second indication information includes one DL TCI state and two UL TCI states. In this case, the terminal device may perform uplink sending by using two beam directions, and perform downlink receiving by using one beam direction. Example 2: The second indication information includes one joint TCI state and one UL TCI state. In this case, the terminal device may perform uplink sending by using two beam directions, and may perform downlink receiving by using one beam direction. This is because the joint TCI state may be used for both uplink sending and downlink receiving.

In a possible design, the first indication information may further indicate types of the plurality of beam directions.

In a possible implementation, a type of a beam direction corresponding to each TCI state is fixed, and the terminal device can learn of a type of a beam direction corresponding to a TCI state ID provided that the first indication information indicates the TCI state ID. For example, a type of a beam direction corresponding to the TCI state ID=1 is a joint TCI state, a type of a beam direction corresponding to the TCI state ID=2 is a DL TCI state, a type of a beam direction corresponding to the TCI state ID=3 is a UL TCI state, and a type of a beam direction corresponding to the TCI state ID=4 is a UL TCI state. If the first indication information includes the TCI state ID=1 and the TCI state ID=2, it indicates that the first indication information indicates two beam directions. One beam direction is the same as a beam direction of the SSB index #1, and the beam direction may be used by the terminal device to send an uplink signal and receive a downlink signal. The other beam direction is the same as a beam direction of the SSB index #2, and the other beam direction is used only by the terminal device to receive a downlink signal.

In a possible implementation, a type of a beam direction corresponding to a TCI state ID is the same as a type of a beam direction of a quasi co-location reference signal corresponding to a TCI state indicated by the TCI state ID. The foregoing TCI state ID=1 is used as an example. QCL Info corresponding to the TCI state ID=1 is equal to the SSB index #1. Because an SSB is a downlink signal, a type of a beam direction corresponding to the TCI state ID=1 may be consistent with a type of a beam direction of the SSB index #1, that is, the TCI state ID=1 indicates the terminal device to receive the downlink signal.

S202: The terminal device communicates with at least one target cell by using the plurality of beam directions.

The target cell is a cell to which the terminal device is handed over. That the terminal device communicates with the target cell by using the plurality of beam directions is specifically that the terminal device communicates, by using the plurality of beam directions, with a network device to which the target cell belongs. The network device to which the target cell belongs may be, for example, a base station that controls the target cell. A network device (for example, the first network device) to which the source cell belongs and the network device to which the target cell (for example, the second network device) belongs are the same or may be different. This is not limited in this application.

It should be understood that when the terminal device communicates with the target cell by using the plurality of beam directions, a quantity of beam directions for uplink sending may be the same as or different from a quantity of beam directions for downlink receiving. For example, the terminal device may perform uplink sending by using two beam directions, and perform downlink receiving by using one beam direction.

There may be one or more target cells. This is not limited in this application. When there are the plurality of target cells, network devices to which different target cells belong may be the same or may be different. This is not limited in this application. If there are the plurality of target cells, the terminal device may separately communicate with each target cell by using the plurality of beam directions. It should be understood that if the plurality of target cells belong to a same network device, when communicating with each of the plurality of target cells, the terminal device communicates with the network device.

That the terminal device communicates with at least one target cell may be but is not limited to: sending a signal to the at least one target cell, and/or receiving a signal from the at least one target cell.

It may be understood that when communicating with any target cell, the terminal device may repeatedly send a signal to the target cell by using different beam directions in the plurality of beam directions, and/or repeatedly receive a signal from the target cell by using different beam directions in the plurality of beam directions.

Based on S201 and S202, the terminal device may communicate with the target cell by using the plurality of beam directions in a process of cell handover. Therefore, robustness of cell handover can be improved, and a success rate of accessing the target cell by the terminal device can be improved. In addition, a quantity of target cells may be greater than 1, handover of a plurality of serving cells may be further implemented, and uninterrupted large-capacity transmission of the terminal device may be maintained.

In this embodiment of this application, that the terminal device communicates with the at least one target cell by using the plurality of beam directions includes but is not limited to the following two scenarios.

Scenario 1: The terminal device does not need to initiate random access to the at least one target cell.

In this scenario, the terminal device may communicate control signaling and/or service data with the at least one target cell by using the plurality of beam directions. It may be understood that the control signaling and/or the service data are/is control signaling and/or service data communicated by the terminal device after the terminal device accesses the target cell.

Example 1: The terminal device sends the control signaling and/or the service data to the at least one target cell by using the plurality of beam directions. Correspondingly, the at least one target cell receives the control signaling and/or the service data from the terminal device. One target cell is used as an example. If the cell belongs to the second network device, the second network device receives the control signaling and/or the service data from the terminal device.

Example 2: The at least one target cell sends the control signaling and/or the service data to the terminal device by using the plurality of beam directions. Correspondingly, the terminal device receives the control signaling and/or the service data from the at least one target cell. One target cell is used as an example. The cell belongs to the second network device. Correspondingly, the second network device sends the control signaling and/or the service data to the terminal device.

Optionally, the first message may further carry one or more of the following information:
(1) third indication information, indicating synchronization information of the at least one target cell, for example, a timing advance (Timing Advance, TA), where
   it may be understood that if the first message carries synchronization information of any target cell, it is considered that the terminal device does not need to initiate random access to the target cell, and the terminal device may directly use the synchronization information of the target cell and a plurality of beams indicated by the first indication information, and perform uplink and downlink communication in the target cell on a preconfigured channel;
(2) fourth indication information, indicating that the terminal device does not need to initiate random access to the at least one target cell;
(3) an identifier of the at least one target cell, for example, the identifier being associated with a physical cell identifier (Physical Cell Identifier, PCI) of the target cell;
(4) a radio network temporary identifier (Radio Network Temporary Identifier, RNTI) that needs to be used by the terminal device in the at least one target cell, for example, a cell radio network temporary identifier (Cell-Radio Network Temporary Identifier, C-RNTI), or indication information indicating whether to inherit an RNTI of the source cell; and
(5) uplink scheduling information of the terminal device, for example, uplink grant (UL grant) and/or hybrid automatic repeat request (Hybrid Automatic Repeat Request, HARQ) feedback configuration information.

The foregoing information is provided, so that efficiency of communication between the terminal device and the target cell can be improved.

Optionally, the terminal device may send a second message to the at least one target cell by using the plurality of beam directions, where the second message indicates whether the terminal device successfully receives the first message. The second message may be used as a response to the first message.

In this case, a manner of rolling back to random access may be introduced to ensure handover reliability. A rollback condition may be any one of the following.
(1) Rollback condition 1: After sending the second message, the terminal device starts a timer. After receiving a message sent by the at least one target cell, the terminal device stops the timer. If the terminal device does not receive the message from the at least one target cell, after the timer expires, the terminal device initiates random access in the at least one target cell or initiates random access in the source cell.
(2) Rollback condition 2: The terminal device may repeatedly send the second message. If a quantity of times of sending the second message reaches a preset threshold, but still no message returned by the at least one target cell is received, the terminal device may initiate random access in the at least one target cell, or initiate random access in the source cell.

In this way, the network device can sense a status of the terminal device in a timely manner, to better control the terminal device to perform cell handover, thereby improving reliability of cell handover.

Scenario 2: The terminal device needs to initiate random access to the at least one target cell.

In this scenario, the terminal device may initiate random access to the at least one target cell by using the plurality of beam directions.

Optionally, the first message may further carry one or more of the following:
(1) fifth indication information, indicating that the terminal device needs to initiate random access to the at least one target cell;
(2) sixth indication information, indicating whether the terminal device reports a reference signal measurement result of the at least one target cell in a random access procedure;
(3) seventh indication information, indicating a quantity of times that the terminal device repeatedly sends a preamble (preamble);
(4) eighth indication information, indicating a type of a cell to which the terminal device needs to be handed over, where
   optionally, the terminal device is in a CA scenario, and the cell type includes a primary cell and/or a secondary cell;
(5) an identifier of the at least one target cell, for example, an identifier being associated with a PCI of the target cell;
(6) a preamble that needs to be used by the terminal device to initiate random access in the at least one target cell;
(7) a carrier indication that is for initiating random access and that is sent by the terminal device in the at least one target cell, where
   for example, when the target cell has a normal uplink (Normal Uplink, NUL) carrier and a supplementary uplink (Supplementary Uplink, SUL) carrier, the carrier indication is used to notify the terminal device of a carrier on which random access needs to be performed;
(8) a random access occasion (RACH Occasion, RO) indication that can be used by the terminal device to perform random access in the at least one target cell, where
   for example, a mask indicates that ROs can be used for random access;
(9) an indication indicating whether the terminal device reports a measurement result in a random access procedure, for a network (target cell) to obtain latest beam signal quality;
(10) a C-RNTI that needs to be used by the terminal device in the at least one target cell, or indication information indicating whether to inherit an RNTI of the source cell; and
(11) a mode for sending a preamble through beam hopping, where
   for example, the terminal device sends a preamble for four times in two directions: a beam 1 and a beam 2, and may indicate that a mode is beam 1-beam 1-beam 2-beam 2 or beam 1-beam 2-beam 1-beam 2.

One or more pieces of the foregoing information is provided, so that efficiency of initiating random access by the terminal device to the target cell can be improved, thereby improving efficiency of cell handover.

In this embodiment of this application, random access may be four-step random access, or may be two-step random access. This is not limited in this application. In a case of four-step random access, a random access manner may be a contention-based random access (Contention-Based Random Access, CBRA) manner, or may be a contention-free random access (Contention-Free Random Access, CFRA) manner. This is not limited in this application.

Optionally, the terminal device may first attempt to perform random access in the CFRA manner. When a quantity of access attempts reaches a specific quantity of times or attempt time reaches specific duration but access is not successfully completed (that is, cell handover is not successfully completed), the terminal device may be handed over to the CBRA manner to perform random access.

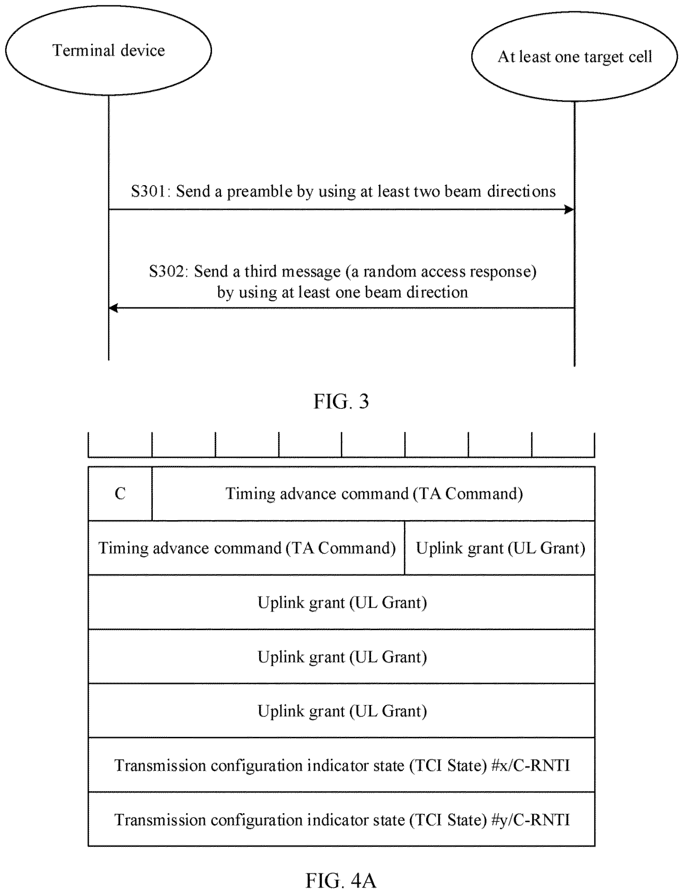

Refer to FIG. 3. That the terminal device initiates random access to at least one target cell includes the following steps.

S301: A terminal device sends a preamble to at least one target cell by using at least two of a plurality of beam directions, and correspondingly, the at least one target cell receives the preamble by using the plurality of beam directions.

Specifically, the terminal device may repeatedly send the preamble on a plurality of random access occasions by using different beam directions in the at least two beam directions, thereby improving a success rate of successfully receiving the preamble by the at least one target cell.

One target cell is used as an example. If the target cell belongs to a second network device, the terminal device repeatedly sends a preamble to the second network device on a plurality of transmission occasions by using at least two beam directions. The second network device repeatedly receives, on the plurality of transmission occasions by using the at least two beam directions, the preamble sent by the terminal device. It may be understood that, due to interference of a channel condition or another factor, a quantity of preambles actually received by the second network device may be less than a quantity of preambles actually sent by the terminal device.

It may be understood that the preamble sent by the terminal device may be a preamble that is indicated in a first message and that needs to be used by the terminal device to initiate random access in the at least one target cell. A quantity of times that the terminal device repeatedly sends the preamble is a quantity of indication times in the first message (seventh indication information).

During specific implementation, the terminal device may send the preamble on a PRACH, and a used beam direction is a beam direction indicated by first indication information. For example, if a reference signal associated with a TCI state ID carried in the first indication information is an SSB index #1 of the target cell, the terminal device uses the reference signal as a transmit beam direction reference, and may adjust, based on a direction of receiving the reference signal, a beam direction/a spatial filtering direction for sending the PRACH.

During specific implementation, a method for determining a time-frequency location at which the terminal device sends the preamble, that is, the RO, includes but is not limited to the following three manners.

Manner 1: The terminal device determines the RO based on a mapping relationship between the RO and the reference signal of the target cell. For example, the mapping relationship is predefined. The SSB index #1 corresponds to an RO #1, and an SSB index #2 corresponds to an RO #2. When the reference signal associated with the TCI state ID carried in the first indication information is the SSB index #2, the terminal device sends the preamble through a time-frequency resource corresponding to the RO #2.

Manner 2: The terminal device selects an earliest available RO to send the preamble.

It should be understood that when the first message indicates available ROs, for example, when an RO mask indicates that ROs are available ROs, the earliest RO is determined from the available ROs indicated by the first message

Manner 3: The terminal device randomly selects the RO to send the preamble.

It should be understood that when the first message indicates available ROs, for example, when an RO mask indicates that ROs are available ROs, the RO is randomly selected from the available ROs indicated by the first message

Optionally, when the terminal device is configured with a CFRA resource of a two-step RACH of the target cell, the terminal device may send a reference signal measurement result of the target cell on a PUSCH channel associated with the RO, for a network side to obtain latest beam signal quality. Further, when the first message indicates a requested measurement result, the terminal device may send the reference signal measurement result of the target cell on the PUSCH channel associated with the RO.

S302: The at least one target cell sends a third message (the third message is a random access response message, or the third message includes a random access response message) to the terminal device by using at least one of the plurality of beam directions, and the terminal device receives the third message.

It may be understood that when the terminal device sends the preamble in the plurality of target cells, the target cells may separately reply to the third message (the third message carries only response content of one target cell), or one cell may uniformly reply to one third message (the third message may carry response content of the plurality of target cells). For example, a primary cell in the plurality of target cells replies to the third message. This is not limited in this application. It should be understood that when the one cell uniformly replies to the one third message, one or more beam directions may be used. This is not limited in this application.

A third message replied by one target cell (for example, a first target cell) is used as an example, and the third message may further carry one or more of the following:
(1) ninth indication information, where the ninth indication information indicates synchronization information of the first target cell, and
   for example, the synchronization information of the first target cell may be a TA of the first target cell;
(2) tenth indication information, indicating at least one activated beam direction, where
   the indication information is provided, and after successful access, the terminal device can use the activated beam direction, so that communication can be performed more quickly by using a more accurate beam direction, thereby improving communication reliability and a capacity;
(3) eleventh indication information, indicating a C-RNTI allocated by the first target cell to the terminal device, or indication information indicating whether to inherit an RNTI of a source cell;
(4) twelfth indication information, indicating synchronization information of a second target cell, where the at least one target cell includes the second target cell, and the second target cell is different from the first target cell;
(5) thirteenth indication information, indicating that the third message carries the tenth indication information, the eleventh indication information, or the twelfth indication information; and
(6) a UL grant of the terminal device in the first target cell.

In a possible implementation, the third message may be L 1 layer signaling or L2 layer signaling. This is not limited in this application. The L1 layer is a physical layer, and the L2 layer is a media access control (Media Access Control, MAC) layer. For example, the third message may be carried in a MAC protocol data unit (Protocol Data Unit, PDU), or the third message is a MAC PDU message.

It may be understood that, if the random access procedure is a two-step random access procedure, S301 is a first step in the two-step random access procedure, that is, the terminal device sends a MsgA (a message A). Because the MsgA includes a preamble and an uplink data packet, S301 may be correspondingly extended to: The terminal device sends the preamble and the uplink data packet to at least one target cell by using at least two of the plurality of beam directions, and correspondingly, the at least one target cell receives the preamble and the uplink data packet by using the plurality of beam directions. S302 is a second step in the two-step random access procedure, that is, the terminal device receives a MsgB (a message B), where the MsgB includes response information for the preamble and/or the uplink data packet.

If the random access procedure is a four-step random access procedure, S301 is a first step in the four-step random access procedure, that is, the terminal device sends a Msg1 (a message 1), where the Msg1 includes a preamble. S302 is a second step in the four-step random access procedure, that is, the terminal device receives a Msg2 (a message 2), where the Msg2 includes response information for the preamble.

In some possible implementations, the MsgB or the Msg2 in the random access procedure is carried in the MAC PDU. Further, in this embodiment of this application, a known format of the MAC PDU may be reused to carry one or more pieces of the foregoing information.

Example 1: When the third message carries only response content of one target cell, a format of the MAC PDU may be shown in FIG. 4A, and last two bytes of the MAC PDU carry information about a C-RNTI allocated by the first target cell to the terminal device or information about an activated beam direction. Fields in the MAC PDU are described as follows.
(1) A timing advance command (TA Command) field indicates synchronization information of the terminal device in the target cell, for example, a TA of the target cell.
(2) A UL grant field indicates scheduling information used by the terminal device to perform uplink transmission in the target cell.
(3) A transmission configuration indicator state (TCI State) field indicates an activated beam direction of the target cell.
(4) A C-RNTI field indicates a C-RNTI allocated by the target cell to the terminal device.
   It may be understood that the C-RNTI field and the TCI state field cannot coexist in the third message, that is, the third message includes only the C-RNTI field, or includes only the TCI state field. As shown in FIG. 4A, the last two bytes in the MAC PDU message indicate either the C-RNTI field or the TCI state field.
(5) A control (Control, C) field indicates whether the third message carries a C-RNTI field, indicates whether the third message carries a TCI state field, or indicates whether the third message carries a C-RNTI field or a TCI state field.

For example, when C=1, it indicates that the C-RNTI field exists, the TCI state field does not exist, and the C-RNTI field indicates a C-RNTI value allocated by the target cell to the terminal device; or when C=0, it indicates that the C-RNTI field does not exist, the TCI state field exists, and the TCI state field indicates an activated beam direction of the target cell.

When the TCI state field exists but the C-RNTI field does not exist (that is, the third message indicates the activated beam direction of the target cell), after random access is completed, when the target cell schedules the terminal device to perform uplink and downlink communication, the terminal device may use the activated beam direction indicated by the TCI state field. It should be noted that the activated beam direction is not necessarily a beam direction used by the terminal device for uplink and downlink communication after the terminal device accesses the target cell. For example, when there are a plurality of activated beam directions, the target cell may use a PDCCH to indicate one or more of the plurality of activated beams that need to be used by the terminal device. For example, refer to FIG. 1. If a TCI field in the PDCCH indicates 000, the terminal device needs to perform communication by using a beam direction corresponding to an activated TCI state #x. If the TCI field indicates 001, the terminal device needs to perform communication by using a beam direction corresponding to an activated TCI state #y. If the TCI field indicates 000 and 001, the terminal device needs to perform communication by using beam directions corresponding to an activated TCI state #x and an activated TCI state #y. When one beam direction is activated, this unique activated direction may be the beam direction used by the terminal device to perform uplink and downlink communication after the terminal device accesses the target cell. Certainly, when the target cell schedules the terminal device to perform uplink and downlink communication, the terminal device may further use one or more of the plurality of beam directions indicated by the first message

When the TCI state field exists but the C-RNTI field does not exist, the terminal device may obtain a C-RNTI of the terminal device in the target cell in a preconfiguration manner (for example, a C-RNTI preconfigured for the terminal device when the target cell is used as a candidate cell, or a C-RNTI of the terminal device in the source cell is inherited). In this case, the third message may be scheduled by using a PDCCH scrambled by using the C-RNTI.

When the TCI state field does not exist but the C-RNTI field exists, after random access is completed, when the target cell schedules the terminal device to perform uplink and downlink communication, the terminal device may use one or more of the plurality of beam directions indicated by the first message.

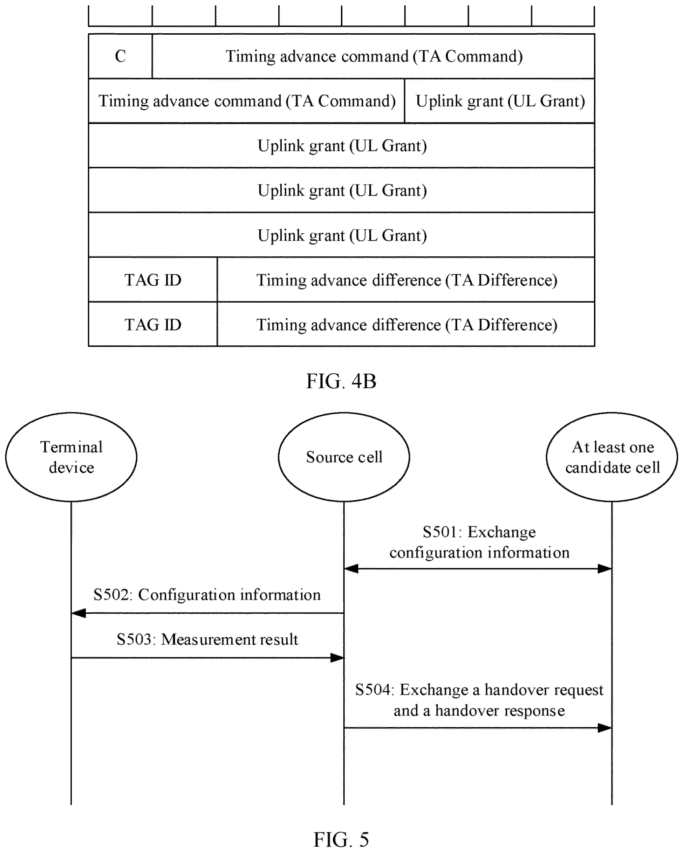

Example 2: In an example in which the third message is sent by the first target cell, when the third message carries response content of a plurality of target cells, a format of the MAC PDU may be shown in FIG. 4B, and last two bytes of the MAC PDU carry synchronization information of a target cell different from the first target cell. Fields in the MAC PDU are described as follows.
(1) A timing advance command (TA Command) field indicates synchronization information of the first target cell, for example, a TA of the first target cell. Optionally, the first target cell may be a primary cell.
(2) A UL grant field indicates scheduling information used by the terminal device to perform uplink transmission in the first target cell.
(3) A timing advance group (TA Group, TAG) identifier (ID) field and a timing advance difference (TA Difference) field indicate synchronization information of a target cell different from the first target cell.

In this embodiment of this application, a plurality of cells may be grouped into one or more groups based on whether the plurality of cells have a same or similar TA. For example, a cell 1 and a cell 2 have a same TA, and a cell 3 has a different TA. In this case, the cell 1, the cell 2, and the cell 3 may be grouped into two groups according to a TA situation. {cell 1, cell 2} is a group and is denoted as a TAG #1, and {cell 3} is a group and is denoted as a TAG #2. In the third message, a combination of the TAG ID field and the TA difference field indicates a TA value of a TAG different from a TAG in which the first target cell is located. For example, if the first target cell is the cell 1, the TA command field indicates a TA value of the cell 1 (that is, the TAG #1), one TAG ID in the third message is equal to the TAG #2, and the TA difference field after the TAG #2 may indicate a relative TA value (for example, a difference) between a TA value of the TAG #2 and the TA value of the TAG #1. The terminal device may determine the TA value of the TAG #2 based on the TAG #2 and the TA difference, to obtain a TA value of the cell 3. Certainly, the TA difference field may also indicate an absolute TA value. This is not limited in this application.

It should be understood that FIG. 4B shows two groups of TAG ID fields and TA difference fields. Actually, there may be fewer or more groups of TAG ID fields and TA difference fields. This is not limited in this application. In addition, in actual application, cells may not be grouped, and last two or more bytes of the MAC PDU directly indicate an identifier of another target cell and an absolute (or relative) TA value of the another target cell. This is not limited in this application.

(4) A C field may be null and is considered as a reserved field. Alternatively, when C=1 or 0, it indicates that the third message carries a TAG ID field and a TA difference field.

It should be understood that FIG. 4A and FIG. 4B are merely examples. In actual application, the MAC PDU may alternatively have another format.

In the foregoing two examples, the known format of the MAC PDU is reused to carry the information, so that new information can be carried without increasing a length of the MAC PDU, thereby ensuring that the terminal device correctly receives the MAC PDU.

After the terminal device receives the third message and successfully decodes the third message, it is considered that random access succeeds, and the terminal device is successfully handed over to the target cell and communicates control signaling and/or service data with the at least one target cell. For example, the terminal device sends uplink data to the at least one target cell through an uplink resource indicated by the UL grant.

Further, the terminal device may communicate the control signaling and/or the service data with the at least one target cell by using beam directions indicated in the first message (by using some or all of the beam directions indicated in the first message), by using activated beam directions indicated in the third message (by using some or all of the activated beam directions indicated in the third message), or by using both the beam direction indicated in the first message and the activated beam direction indicated in the third message. This is not limited in this application.

For example, when the terminal device performs random access in a four-step CBRA manner, the terminal device may send a message 3 (Msg 3) by using the beam direction indicated in the first message and/or the activated beam direction indicated in the third message.

Optionally, a UL grant in the third message may further indicate whether to request the terminal device to send a reference signal measurement result (for example, a channel state information request (Channel State Information Request, CSI-Request) of the target cell). When the third message indicates to request the terminal device to send the reference signal measurement result, the terminal device may include the reference signal measurement result of the target cell when sending the uplink data by using the UL grant.

In this embodiment of this application, before the source cell sends the first message, the source cell needs to first interact with at least one candidate cell. After the interaction is completed, one or more cells in the at least one candidate cell are determined as the target cell, and then the source cell may send the first message to the terminal device. It may be understood that before being determined as the target cell, the target cell is also a candidate cell.

FIG. 5 shows an information exchange method according to an embodiment of this application. The method includes the following steps.

S501: A source cell exchanges configuration information with at least one candidate cell, and the source cell obtains configuration information of the at least one candidate cell.

It may be understood that, if a network device to which the source cell belongs is the same as a network device to which the candidate cell belongs, the interaction process is completed in the network device (for example, a function module that controls the source cell and a function module that controls the candidate cell in the network device exchange information). If the network device to which the source cell belongs is different from the network device to which the candidate cell belongs, the interaction process is represented as message transmission between the two network devices.

The configuration information of the at least one candidate cell may include at least one of the following:
(1) a reference signal configuration of each candidate cell (for example, an SSB configuration, a channel state information reference signal (Channel State Information Reference Signal, CSI-RS) configuration, and an SRS configuration);
(2) a beam direction configuration of each candidate cell (for example, a TCI state configuration, including a joint TCI state, a UL TCI state, and a DL TCI state);
(3) an identifier indication of each candidate cell, for example, a PCI;
(4) a correspondence between a beam direction configuration and a cell identifier (for example, a correspondence between a TCI state and a PCI);
(5) a physical layer channel configuration of each candidate cell (for example, a PDSCH configuration, a PDCCH configuration, a PUSCH configuration, and a PUCCH configuration);
(6) a C-RNTI allocated by each candidate cell to the terminal device; and
(7) a random access resource configuration of the candidate cell, for example, a CBRA configuration of a four-step RACH, a CFRA configuration of the four-step RACH, a CBRA configuration of a two-step RACH, and a CFRA configuration of the two-step RACH.

S502: The source cell sends configuration information of each candidate cell to the terminal device.

Optionally, the configuration information of each candidate cell may be sent through a radio resource control (Radio Resource Control, RRC) message. The RRC message may include not only the configuration information of the candidate cell, but also configuration information of the source cell. For a type of the configuration information of the source cell, refer to the type of the configuration information of the candidate cell. Details are not described herein again.

S503: The terminal device measures the source cell and the candidate cell, and sends a measurement result to the source cell.

Specifically, the terminal device measures a reference signal of the source cell based on the configuration information of the source cell (which may be obtained in step S502, or may be obtained previously), and measures a reference signal of the candidate cell based on the configuration information of the candidate cell. The terminal device sends beam-level measurement results of the candidate cell and the source cell to the source cell. It should be understood that the measurement may be L1 measurement, and the measurement result may be a real-time measurement result (without L1 filtering), or may be a result obtained after L1 filtering. The measurement may also be L3 measurement, for example, an RRC layer measurement result.

S504: The source cell exchanges a handover request and a handover response with the target cell.

Specifically, the source cell determines, based on the measurement result, whether the terminal device performs cell handover.

If it is determined that the terminal device needs to perform cell handover, the source cell may further determine at least one target cell to which the terminal device is to be handed over (the target cell may be determined by the source cell based on the measurement result reported by the terminal device, or may be notified by the terminal device to the source cell, and this is not limited in this application).

Further, the source cell sends a handover request to each target cell, where the handover request is used to indicate that the terminal device requests to be handed over to the target cell. After receiving the handover request, the target cell performs admission control decision, determines whether the target cell allows access of the terminal device, and returns a response message to the source cell, to notify the source cell of a decision result. Optionally, the response message may further include at least one of the following: a C-RNTI allocated by the target cell to the terminal device, a preamble used for random access to the target cell, synchronization information (for example, a TA) of the target cell, and a beam direction used by the target cell to communicate with the terminal device.

Further, the interaction information in S504 may include a measurement result of the terminal device for the at least one target cell. For example, the source cell sends the measurement result received from the terminal device to the at least one target cell, for the target cell to perform admission control decision and/or beam selection for the target cell.

Similarly, if the network device to which the source cell belongs is the same as the network device to which the candidate cell belongs, the interaction process is completed in the network device. If the network device to which the source cell belongs is different from the network device to which the candidate cell belongs, the interaction process is represented as message transmission between the two network devices.

Handover of one target cell is used as an example. For example, if the network device to which the source cell of the terminal device belongs is a first network device, and a network device to which a first target cell belongs is a second network device, the first network device sends a fifth message (that is, a handover request) to the second network device, where the fifth message indicates that the terminal device requests to access a cell (for example, the first target cell) of the second network device. The second network device sends a fourth message (that is, a handover response) to the first network device, where the fourth message indicates that the terminal device is allowed to be handed over to the first target cell. If there are a plurality of target cells, the process is performed for each target cell. Details are not described herein again.

Certainly, if the source cell can independently complete a cell handover decision (for example, in S501, the candidate cell has notified the source cell of sufficient configuration information, including admission control information), S504 may also be omitted.

According to S501 to S504, the source cell may interact with the candidate cell to determine the target cell, thereby improving reliability of the solution.

After S504 is completed, the method procedure of S201 and S202 shown in FIG. 2 may be performed.

Optionally, after the terminal device completes cell handover, the terminal device releases a resource that is configured by one or more cells for the terminal device and that is used for cell handover. The resource that is configured by the one or more cells for the terminal device and that is used for cell handover may include one or more of the following: a resource that is configured by the source cell for the terminal device and that is used for cell handover, a resource that is configured by the target cell for the terminal device and that is used for cell handover, and a resource that is configured by the candidate cell for the terminal device and that is used for cell handover (the candidate cell herein is understood as a candidate cell that is not used as the target cell). For a resource that is configured by each cell for the terminal device and that is used for cell handover, refer to the resource (such as the reference signal and the beam direction) indicated by each piece of configuration information in step S501. Details are not described herein again. It should be understood that before the terminal device releases the resource used for cell handover, it may be considered that the terminal device reserves the resource used for cell handover.

During specific implementation, a release manner includes but is not limited to the following three types.
(1) The terminal device receives indication information sent by a current cell, where the indication information indicates the terminal device to release a resource that is configured by one or more cells for the terminal device and that is used for cell handover. Correspondingly, the terminal device releases, based on the indication information, the resource that is configured by the one or more cells for the terminal device and that is used for cell handover. For example, the current cell of the terminal device is the target cell, and the target cell sends indication information to indicate the terminal device to release resources that are configured by the source cell and the candidate cell for the terminal device and that are used for cell handover.
(2) After the terminal device leaves coverage of a cell, the terminal device releases a resource that is configured by the cell for the terminal device and that is used for cell handover. For example, after the terminal device is handed over from the source cell to the target cell, if the terminal device is still within coverage of the source cell and the candidate cell, resources that are configured by the source cell and the candidate cell for the terminal device and that are used for cell handover may not be released temporarily. After leaving the coverage of the source cell, the terminal device releases the resource that is configured by the source cell for the terminal device and that is used for cell handover. After leaving the coverage of the candidate cell, the terminal device releases the resource that is configured by the candidate cell for the terminal device and that is used for cell handover. Whether the terminal device leaves the coverage of the cell may be determined by the terminal device based on a measurement result of the cell. For example, the terminal device measures a reference signal of the cell, and if the measurement result is lower than a preset threshold, it is considered that the terminal device leaves the coverage of the cell. Another method for determining, by the terminal device, whether the terminal device leaves the coverage of the cell may be as follows: The terminal device determines whether an identity of a cell on which the terminal device currently camps is the same as that of the cell. For example, if the network device indicates, based on a cell handover command, the terminal device to be handed over from a cell 1 to a cell 2, it is considered that the terminal device leaves the coverage of the cell 1 after being successfully handed over to the cell 2.
   It should be understood that the resource release method may be further used to determine release of resources of a plurality of cells. For example, a plurality of candidate cells are configured for the terminal device. When the terminal device is within coverage of any one of the plurality of candidate cells, the terminal device may not release the resources used for cell handover of the plurality of cells. When the terminal device is not within the coverage of any one of the plurality of candidate cells, the terminal device may release the resources used for cell handover of the plurality of cells.
(3) The terminal device maintains a first timer, and after the first timer expires, the terminal device releases a resource that is configured by one or more cells for the terminal device and that is used for cell handover. Optionally, the terminal device may uniformly maintain one first timer for a plurality of different cells. After the first timer expires, the terminal device simultaneously releases resources that are configured by the plurality of different cells for the terminal device and that are used for cell handover. Alternatively, the terminal device may maintain different first timers for different cells. After a first timer corresponding to a cell expires, the terminal device releases a resource that is configured by the cell for the terminal device and that is used for cell handover. Optionally, each time the terminal device performs cell handover, the first timer starts counting again.

Optionally, when the terminal device releases a resource that is configured by a cell for the terminal device and that is used for cell handover, a base station corresponding to the cell may also release the resource that is configured by the cell for the terminal device and that is used for cell handover. A specific implementation corresponds to that of the terminal device side. Details are not described herein again.

Optionally, one cell may notify another cell to release a resource that is configured by the another cell for the terminal device and that is used for cell handover. For example, the target cell (by sending the indication information to the terminal device) notifies the terminal device to release resources that are configured by the source cell and the candidate cell for the terminal device and that are used for cell handover, notifies the source cell to release the resource that is configured by the source cell for the terminal device and that is used for cell handover, and notifies the candidate cell to release the resource that is configured by the candidate cell for the terminal device and that is used for cell handover.

According to the foregoing method for releasing the resource used for cell handover, the terminal device may reserve the resource for a period of time in some cases, and the resource is used for a subsequent handover process. In this method, configuration signaling overheads can be reduced. In addition, when the terminal device may not need the resource any more, the terminal device and the network device release the resource in a timely manner, and the released resource is used for communication of another terminal device. This helps improve an overall network capacity.

The foregoing embodiments are described by using an example in which the terminal device performs cell handover based on a granularity of a single cell. In a specific implementation process, the terminal device may further perform cell handover and resource release determining based on a granularity of a cell group.

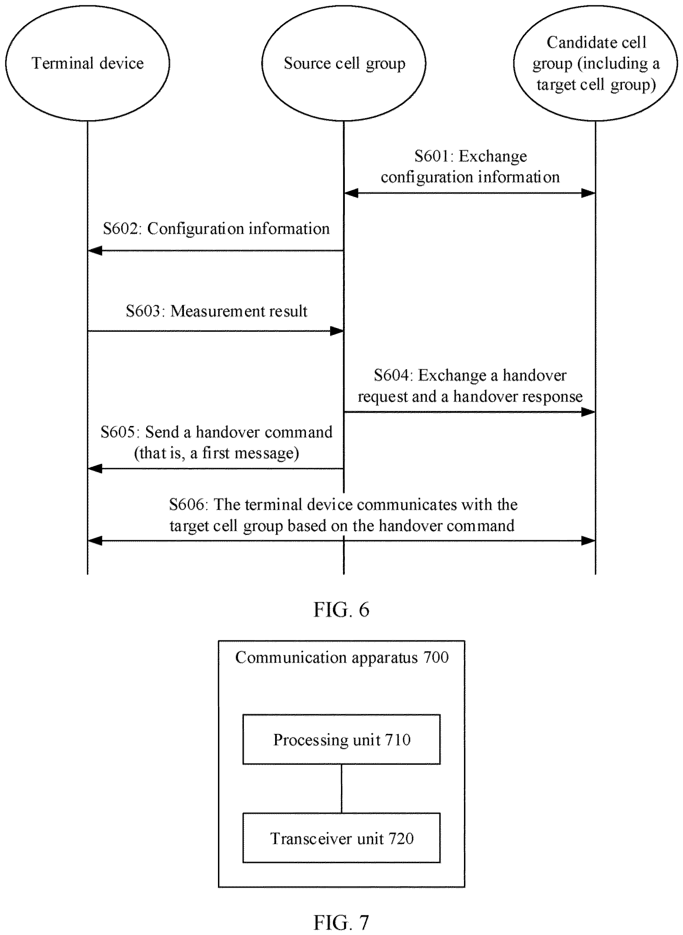

For example, FIG. 6 shows another information exchange method according to an embodiment of this application. The method includes the following steps.

S601: A source cell group exchanges configuration information with a candidate cell group (including a target cell group).

The source cell group may include one or more source cells, and the candidate cell group may include one or more candidate cells. That a source cell group exchanges configuration information with a target cell group may be that one or more member cells in the source cell group exchanges configuration information with one or more member cells in the target cell group. For a process of exchanging the configuration information between the cells, refer to S501. Details are not described herein again.

The configuration information of the candidate cell group includes configuration information of each cell in the candidate cell group. For details about the configuration information of each cell, refer to the related descriptions in S501. Details are not described herein again.

Further, in addition to the configuration information of each cell, the configuration information of the candidate cell group may further include at least one of the following:
(1) a cell group identifier and cell member information of the candidate cell group, where
   for example, candidate cells may belong to a same cell group, and during handover, handover of the entire group may be completed;
(2) synchronization information of a cell member in the candidate cell group, where
   for example, whether cell members in a same group have a same or similar TA is determined, or cell members in a same group are further grouped based on whether the cell members in the same group have a same or similar TA, and for example, if a candidate cell group includes three cell members: a cell 1, a cell 2, and a cell 3, where the cell 1 and the cell 2 have a same TA, and the cell 3 has a different TA, the candidate cell group may be further grouped into two groups according to a TA situation. {cell 1, cell 2} is a group and is denoted as a TAG #1, and {cell 3} is a group and is denoted as a TAG #2; and
(3) a beam reference feature of a cell member in the candidate cell group.

For example, whether cell members in a same group have a same or similar beamforming/space-domain filtering feature is determined. If the cell members in the same group have the same or similar beamforming/space-domain filtering feature, and if a better beam direction for communication between one of the cells and the terminal device is known, it may also be considered that the beam direction is better for other cells, that is, beams between the cell members may refer to each other. Further, a beam reference cell may be configured for the cell member in the cell group. For a cell configured with the beam reference cell, beam adjustment may be performed with reference to beam adjustment of the reference cell. For example, if a candidate cell group includes three cell members: a cell 1, a cell 2, and a cell 3, a beam reference cell of the cell 2 is configured as the cell 1, and a beam reference cell of the cell 3 is also configured as the cell 1, when a beam for communication between the cell 1 and the UE is adjusted, beam directions of the cell 2 and the cell 3 are also adjusted with reference to the cell 1.

S602: The source cell group sends configuration information of the candidate cell group to the terminal device.

That the source cell group sends information to the UE may be that one or more member cells in the source cell group send the information to the terminal device.

For a specific sending manner, refer to the related descriptions in S502. Details are not described herein again.

S603: The terminal device performs measurement based on the configuration information, and sends a measurement result to the source cell.

For a specific measurement manner, refer to the related descriptions in S503. Details are not described herein again.

S604: The source cell group exchange a handover request and a handover response with the target cell group

That the source cell group exchanges a handover request and a handover response with the target cell group may be that one or more member cells in the source cell group exchanges the handover request and the handover response with one or more member cells in the target cell group. For a process of exchanging the handover request and the handover response between the cells, refer to S504. Details are not described herein again.

S605: The source cell group sends a handover command (that is, a first message) to the terminal device through L 1/L2 signaling, to notify the terminal device to perform cell group handover and/or beam handover.

It should be understood that beam configurations corresponding to different cell groups may be different. Therefore, cell group handover may also be referred to as beam handover.

The L1 signaling may be PDCCH signaling, and the L2 signaling may be a MAC control element (Control Element, CE).

The handover command may be sent to the terminal device by any cell in the source cell group. For example, the handover command is sent by a primary cell in the source cell group.

The handover command may include at least one of the following:
(1) a cell handover behavior indication, where
   for example, one of the following three behaviors is indicated: (1) secondary cell (Secondary Cell, SCell) handover is not performed, and only primary cell (Primary Cell, PCell) handover is performed; (2) PCell handover is not performed, and only SCell handover is performed; and (3) both PCell handover and SCell handover are performed;
(2) one or more beam directions that need to be used by the terminal device in the target cell group, for example, one or more TCI states of the target cell group, where the one or more TCI states may be a joint TCI state, a UL TCI state, and/or a DL TCI state;
(4) an identifier of a target cell to which the terminal device needs to be handed over or an identifier of the target cell group, where the identifier of the target cell or the identifier of the target cell group may be, for example, an ID indication associated with a PCI of the target cell;
(5) an indication indicating whether the terminal device needs to initiate random access when being handed over to the target cell group;
(6) a preamble that needs to be used by the terminal device to perform random access in the target cell group, where
   for example, a same preamble or different preambles may be allocated to a plurality of cells in the target cell group;
(7) a carrier indication used by the terminal device to perform random access in the target cell group, where for example, when there is an NUL carrier and an SUL carrier in the cell in the target cell group, the carrier indication notifies the terminal device of a carrier on which random access needs to be performed;
(8) an RO indication that can be used by the terminal device to perform random access in the cell in the target cell group, where
   for example, the indication may be a mask, and the mask indicates that ROs can be used for random access;
(9) an indication indicating a quantity of times that the terminal device needs to repeatedly send the preamble in the cell in the target cell group;
(10) synchronization information that needs to be used by the terminal device in the cell in the target cell group, where
   for example, the synchronization information may be TAs of different cells in the target cell group, further, the synchronization information may be indicated in a manner of notifying whether the target cell group has a same TA with the source cell group, or notifying different cells in the target cell group of specific TAs, and further, if TAGs are distinguished in the target cell group, the TA may be indicated based on the TAGs; and for details, refer to the descriptions in the foregoing embodiments related to FIG. 4A and FIG. 4B, and details are not described herein again;
(11) an RNTI that needs to be used by the terminal device in the at target cell group, or indication information indicating whether to inherit an RNTI of the source cell;
(12) an indication indicating whether the terminal device reports a measurement result in a random access procedure; and
(13) uplink scheduling information of the terminal device, for example, UL grant and/or HARQ feedback configuration information.

S606: The terminal device communicates with the target cell group based on the handover command in S605.

For example, the terminal device sends a preamble to the target cell group to perform random access, and the target cell group sends a random access response to the terminal device. When the target cell group includes a plurality of cells, the terminal device may send the preamble in one or more cells in the cell group. For example, when all cells in the target cell group have a same TA (belonging to a same TAG), the terminal device may send the preamble to only one cell.

According to S601 to S606, the terminal device may perform cell handover based on the granularity of the cell group, so that cell handover efficiency can be further improved.

Similarly, after the terminal device completes cell handover, the terminal device further releases a resource that is configured by one or more cell groups for the terminal device and that is used for cell handover. For a specific implementation, refer to the foregoing specific implementation in which the terminal device releases the resource that is configured by the one or more cells for the terminal device and that is used for cell handover. Details are not described herein again.

Similarly, the one or more cell groups may also release the resource that is configured for the terminal device and that is used for cell handover. For a specific implementation, refer to the foregoing specific implementation in which the one or more cells release the resource that is configured for the terminal device and that is used for cell handover. Details are not described herein again.

It may be understood that to implement functions in the foregoing embodiments, the base station and the terminal include corresponding hardware structures and/or software modules for performing various functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

FIG. 7 is a diagram of a structure of a possible communication apparatus according to an embodiment of this application. These communication apparatuses may be configured to implement the function of the terminal or the base station in the foregoing method embodiment, and therefore can also achieve beneficial effect of the foregoing method embodiment. In embodiments of this application, the communication apparatus may be the terminal device shown in FIG. 1, the network device shown in FIG. 1, or a module (for example, a chip) applied to the terminal device or the network device.

As shown in FIG. 7, the communication apparatus 700 includes a processing unit 710 and a transceiver unit 720. The processing unit 710 is configured to control the transceiver unit 720 to implement the function of the terminal device or the network device in the foregoing method embodiment. The network device may be a network device to which a source cell belongs, or may be a network device to which a target cell belongs.

For example, when the communication apparatus 700 is configured to implement the function of the terminal device in the foregoing method embodiment, the transceiver unit 720 is configured to: receive a first message from a network device to which a source cell belongs, where the first message indicates the terminal device to perform cell handover, the first message carries first indication information, and the first indication information indicates a plurality of beam directions; and communicate, by using the plurality of beam directions, with a network device to which at least one target cell belongs, where the at least one target cell is a cell to which the terminal device is handed over

For example, when the communication apparatus 700 is configured to implement the function of the network device to which the source cell belongs in the foregoing method embodiment, the transceiver unit 720 is configured to: receive a fourth message from a second network device, where the fourth message indicates that a first target cell allows a terminal device to be handed over, the second network device is a network device to which the first target cell belongs, and a first network device in which the communication apparatus 700 is located is a network device to which a source cell of the terminal device belongs; and send a first message to the terminal device, where the first message indicates the terminal device to perform cell handover, the first message carries first indication information, the first indication information indicates a plurality of beam directions, the plurality of beam directions are used by the terminal device to communicate with a network device to which at least one target cell belongs, and the at least one target cell includes the first target cell.

For example, when the communication apparatus 700 is configured to implement the function of the network device to which the target cell belongs in the foregoing method embodiment, the transceiver unit 720 is configured to: send a fourth message to a first network device, where the fourth message indicates that a first target cell allows a terminal device to be handed over, a second network device in which the communication apparatus 700 is located is a network device to which the first target cell belongs, and the first network device is a network device to which a source cell of the terminal device belongs; and communicate with the terminal device by using a plurality of beam directions.

For more detailed descriptions about the processing unit 710 and the transceiver unit 720, directly refer to the related descriptions in the foregoing method embodiments. Details are not described herein again.

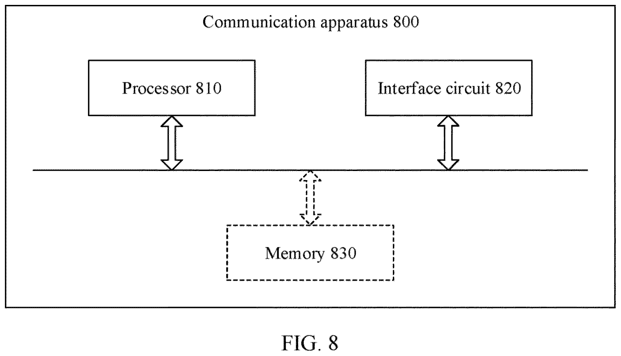

FIG. 8 is a diagram of a structure of another possible communication apparatus according to an embodiment of this application. A communication apparatus 800 includes a processor 810 and an interface circuit 820. The processor 810 and the interface circuit 820 are coupled to each other. It may be understood that the interface circuit 820 may be a transceiver or an input/output interface. Optionally, the communication apparatus 800 may further include a memory 830, configured to: store instructions executed by the processor 810, or store input data required by the processor 810 to run the instructions, or store data generated after the processor 810 runs the instructions.

When the communication apparatus 800 is configured to implement the method in the foregoing method embodiment, the processor 810 is configured to implement a function of the processing unit 710, and the interface circuit 820 is configured to implement a function of the transceiver unit 720.

When the communication apparatus is a chip used in a terminal device, the chip in the terminal device implements the function of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a module used in a network device, the module in the network device implements the function of the network device in the foregoing method embodiments. The module in the network device receives information from another module (for example, a radio frequency module or an antenna) in the network device, where the information is sent by a terminal device to the network device. Alternatively, the module in the network device sends information to another module (for example, a radio frequency module or an antenna) in the network device, where the information is sent by the network device to a terminal device. The network device module herein may be a baseband chip of the network device, or may be a DU or another module. The DU herein may be a DU in an open radio access network (open radio access network, O-RAN) architecture.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

Based on a same technical concept, an embodiment of this application further provides a computer-readable storage medium, including a program or instructions. When the program or the instructions are run on a computer, the method in the foregoing method embodiment is performed.

Based on a same technical concept, an embodiment of this application further provides a computer program product, including instructions. When the instructions are run on a computer, the method in the foregoing method embodiment is performed.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or some of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, at least one means one or more, and a plurality of means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A cell handover method, comprising:
receiving, by a terminal device, a first message from a network device to which a source cell belongs, wherein the first message indicates the terminal device to perform cell handover, the first message carries first indication information, and the first indication information indicates a plurality of beam directions; and
communicating, by the terminal device by using the plurality of beam directions, with a network device to which at least one target cell belongs, wherein the at least one target cell is a cell to which the terminal device is handed over

2. The method according to claim 1, wherein the first message further carries second indication information, the second indication information indicates types of the plurality of beam directions, and the types comprise one or more of the following: a beam direction used by the terminal device to send an uplink signal, a beam direction used by the terminal device to receive a downlink signal, and a beam direction used by the terminal device to send an uplink signal and receive a downlink signal.

3. The method according to claim 1 or 2, wherein the communicating, by the terminal device by using the plurality of beam directions, with a network device to which at least one target cell belongs comprises:
sending, by the terminal device by using the plurality of beam directions, control signaling and/or service data to the network device to which the at least one target cell belongs; and/or
receiving control signaling and/or service data from the network device to which the at least one target cell belongs.

4. The method according to claim 3, wherein the first message further carries:
third indication information, indicating synchronization information of the at least one target cell; and/or
fourth indication information, indicating that the terminal device does not need to initiate random access to the at least one target cell.

5. The method according to claim 3 or 4, wherein the communicating, by the terminal device by using the plurality of beam directions, with a network device to which at least one target cell belongs further comprises:
sending, by the terminal device by using the plurality of beam directions, a second message to the network device to which the at least one target cell belongs, wherein the second message indicates whether the terminal device successfully receives the first message.

6. The method according to claim 1 or 2, wherein the communicating, by the terminal device by using the plurality of beam directions, with a network device to which at least one target cell belongs comprises:
sending, by the terminal device by using at least two of the plurality of beam directions, a preamble to the network device to which the at least one target cell belongs.

7. The method according to claim 6, wherein the first message further carries one or more of the following:
fifth indication information, indicating that the terminal device needs to initiate random access to the at least one target cell;
sixth indication information, indicating whether the terminal device reports a reference signal measurement result of the at least one target cell in a random access procedure;
seventh indication information, indicating a quantity of times that the terminal device repeatedly sends the preamble; or
eighth indication information, indicating a type of a cell to which the terminal device needs to be handed over, wherein the cell type comprises a primary cell and/or a secondary cell.

8. The method according to either of claims 6 and 7, further comprising:
receiving, by the terminal device by using at least one of the plurality of beam directions, a third message from a network device to which a first target cell belongs, wherein the at least one target cell comprises the first target cell, the third message carries ninth indication information, and the ninth indication information indicates synchronization information of the first target cell.

9. The method according to claim 8, wherein the third message further carries:
tenth indication information, indicating at least one activated beam direction;
eleventh indication information, indicating a radio network temporary identifier allocated by the first target cell to the terminal device; or
twelfth indication information, indicating synchronization information of a second target cell, wherein the at least one target cell comprises the second target cell, and the second target cell is different from the first target cell.

10. The method according to claim 9, wherein the third message further comprises thirteenth indication information, and the thirteenth indication information indicates that the third message carries the tenth indication information, the eleventh indication information, or the twelfth indication information.

11. The method according to any one of claims 8 to 10, wherein the third message is carried in a media access control MAC protocol data unit PDU.

12. The method according to claim 9, wherein the method further comprises:
communicating, by the terminal device, control signaling and/or service data with the at least one target cell by using a first beam direction, wherein the first beam direction comprises a beam direction in the plurality of beam directions and/or a beam direction in the at least one activated beam direction.

13. A cell handover method, comprising:
receiving, by a first network device, a fourth message from a second network device, wherein the fourth message indicates that a first target cell allows a terminal device to be handed over, the second network device is a network device to which the first target cell belongs, and the first network device is a network device to which a source cell of the terminal device belongs; and
sending, by the first network device, a first message to the terminal device, wherein the first message indicates the terminal device to perform cell handover, the first message carries first indication information, the first indication information indicates a plurality of beam directions, the plurality of beam directions are used by the terminal device to communicate with a network device to which at least one target cell belongs, and the at least one target cell comprises the first target cell.

14. The method according to claim 13, wherein the first message further carries second indication information, the second indication information indicates types of the plurality of beam directions, and the types comprise one or more of the following: a beam direction used by the terminal device to send an uplink signal, a beam direction used by the terminal device to receive a downlink signal, and a beam direction used by the terminal device to send an uplink signal and receive a downlink signal.

15. The method according to claim 13 or 14, wherein the first message further carries:
third indication information, indicating synchronization information of the at least one target cell; and/or
fourth indication information, indicating that the terminal device does not need to initiate random access to the at least one target cell.

16. The method according to claim 13 or 14, wherein the first message further carries one or more of the following:
fifth indication information, indicating that the terminal device needs to initiate random access to the at least one target cell;
sixth indication information, indicating whether the terminal device reports a reference signal measurement result of the at least one target cell in a random access procedure;
seventh indication information, indicating a quantity of times that the terminal device repeatedly sends a preamble; or
eighth indication information, indicating a type of a cell to which the terminal device needs to be handed over, wherein the cell type comprises a primary cell and/or a secondary cell.

17. A cell handover method, comprising:
sending, by a second network device, a fourth message to a first network device, wherein the fourth message indicates that a first target cell allows a terminal device to be handed over, the second network device is a network device to which the first target cell belongs, and the first network device is a network device to which a source cell of the terminal device belongs; and
communicating, by the second network device, with the terminal device by using a plurality of beam directions.

18. The method according to claim 17, wherein the communicating, by the second network device, with the terminal device by using a plurality of beam directions comprises:
sending, by the second network device, control signaling and/or service data to the terminal device by using the plurality of beam directions, and/or receiving control signaling and/or service data from the terminal device.

19. The method according to claim 18, wherein the communicating, by the second network device, with the terminal device by using a plurality of beam directions further comprises:
receiving, by the second network device, a second message from the terminal device by using the plurality of beam directions, wherein the second message indicates whether the terminal device successfully receives a first message sent by the first network device, the first message indicates the terminal device to perform cell handover, the first message carries first indication information, and the first indication information indicates the plurality of beam directions.

20. The method according to claim 17, wherein the communicating, by the second network device, with the terminal device by using a plurality of beam directions comprises:
receiving, by the second network device, a preamble from the terminal device by using at least two of the plurality of beam directions.

21. The method according to claim 20, further comprising:
sending, by the second network device, a third message to the terminal device by using at least one of the plurality of beam directions, wherein the third message carries ninth indication information, and the ninth indication information indicates synchronization information of the first target cell.

22. The method according to claim 21, wherein the third message further carries:
tenth indication information, indicating at least one activated beam direction;
eleventh indication information, indicating a radio network temporary identifier allocated by the first target cell to the terminal device; or
twelfth indication information, indicating synchronization information of a second target cell, wherein the second target cell is different from the first target cell.

23. The method according to claim 22, wherein the third message further comprises thirteenth indication information, and the thirteenth indication information indicates that the third message carries the tenth indication information, the eleventh indication information, or the twelfth indication information.

24. The method according to any one of claims 21 to 23, wherein the third message is carried in a MAC PDU.

25. The method according to claim 22, wherein the method further comprises:
communicating, by the second network device, control signaling and/or service data with the terminal device by using a first beam direction, wherein the first beam direction comprises a beam direction in the plurality of beam directions and/or a beam direction in the at least one activated beam direction.

26. A communication apparatus, comprising a module configured to perform the method according to any one of claims 1 to 12, claims 13 to 16, or claims 17 to 25.

27. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 12, claims 13 to 16, or claims 17 to 25 through a logic circuit or by executing code instructions.

28. A computer-readable storage medium, comprising a program or instructions, wherein when the program or the instructions are run on a computer, the method according to any one of claims 1 to 12, claims 13 to 16, or claims 17 to 25 is enabled to be performed.

29. A computer program product, comprising instructions, wherein when the instructions are run on a computer, the method according to any one of claims 1 to 12, claims 13 to 16, or claims 17 to 25 is enabled to be performed.
